# EUROPÄISCHE PATENTANMELDUNG

(11) **EP 0 761 388 A2**
(43) Veröffentlichungstag der Anmeldung: **12.03.1997**
(21) Anmeldenummer: 96110275.3
(22) Anmeldetag: 26.06.1996
(51) Int. Cl.: B24B 49/04

(54) **Schleifmaschine**

(30) Priorität: 26.08.1995 DE 19531506
(71) Anmelder: NAXOS-UNION Schleifmittel- und Schleifmaschinenfabrik Aktiengesellschaft, 63225 Langen (DE)
(72) Erfinder: Berberich, Paul, Dipl.-Ing., 60439 Frankfurt am Main (DE)
(74) Vertreter: KEIL & SCHAAFHAUSEN Patentanwälte

(57) **Zusammenfassung**

Die Erfindung betrifft eine Schleifmaschine (1) mit einer wenigstens eine Schleifscheibe (4) tragenden Schleifspindel (3), wobei die Schleifspindel (3) in einem Schleifspindelstock (2) in Lagern (6,7) drehbar antreibbar gelagert ist, und mit einer in einem Werkstückspindelstock drehbar antreibbar gelagerten Werkstückspindel zur Aufnahme und zum Drehen eines Werkstücks (5). Eine eventuelle Schrägstellung (Konizität) zwischen Schleifscheiben- (4) und Werkstückachse läßt sich zuverlässig dadurch ausgleichen, daß wenigstens ein Lager (6,7) der Schleifspindel (3) radial verschieblich in dem Schleifspindelstock (3) angeordnet ist, und daß über einen Piezo-Aktor (12), an den über eine Maschinensteuerung (13) ein definiertes elektrisches Feld anlegbar ist, die Schleifspindelachse relativ zu der Werkstückachse ausrichtbar ist.

## Beschreibung

Die Erfindung betrifft eine Schleifmaschine mit einer wenigstens ein Schleifwerkzeug, insbesondere eine Schleifscheibe, tragenden Schleifspindel, wobei die Schleifspindel in einem Schleifspindelstock in Lagern drehbar antreibbar gelagert ist, und mit einer in einem Werkstückspindelstock drehbar und antreibbar gelagerten Werkstückspindel zur Aufnahme und zum Drehen eines Werkstücks.

Derartige Schleifmaschinen werden bspw. zum Schleifen von Lagersitzen von Kurbelwellen oder dgl. eingesetzt. Zur Beschleunigung des Schleifvorgangs sind dabei häufig mehrere Schleifscheiben nebeneinander auf der Schleifspindel angeordnet, um ein gleichzeitiges Schleifen mehrerer Lagersitze zu ermöglichen. Hierbei kann es jedoch zu einer Schrägstellung (Konizität) zwischen Schleifscheibenachse und Werkstückachse kommen, die zu einem schrägen Abschleifen der Lagersitze oder dgl. führt. Diese Konizität ist meßbar und muß korrigiert werden, um den insbesondere im Automobilbau geforderten hohen Bearbeitungsgenauigkeiten gerecht zu werden. Herkömmlicherweise erfolgt dieser Ausgleich durch eine hydraulische, mechanische oder pneumatische Verstellung der Schleifspindelachse gegenüber der Werkstückspindelachse. Insbesondere bei einer hydraulischen Verstellung besteht jedoch die Gefahr einer Verklemmung im Hydraulikzylinder, da bei sehr hoher aufzubringender Kraft nur kleine Wege zurückgelegt werden.

Aufgabe der Erfindung ist es daher, bei einer gattungsgemäßen Schleifmaschine einen genaueren und zuverlässigeren Ausgleich der Konizität zwischen Schleifspindelachse und Werkstückspindelachse zu ermöglichen.

Diese Aufgabe wird mit der Erfindung im wesentlichen dadurch gelöst, daß wenigstens ein Lager der Schleifspindel radial verschieblich in dem Schleifspindelstock angeordnet ist, und daß über einen Piezo-Aktor, an den über eine Maschinensteuerung ein definiertes elektrisches Feld anlegbar ist, die Schleifspindelachse relativ zu der Werkstückachse ausrichtbar ist. Die Erfindung macht sich die Umkehrung des sogenannten piezo-elektrischen Effekts zunutze, bei der durch Anlegen eines elektrischen Feldes eine elastische Deformation der äußeren Abmessungen eines Körpers (Verlängerung bzw. Verkürzung) erfolgt. Bei einer solchen Elektrostriktion liegen sich infolge der elektrischen Polarisation eines Dielektrikums positive und negative Pole eines Elementardipols jeweils gegenüber und nähern sich aufgrund der elektrostatischen Anziehung bei Erhöhung der Feldstärke. Bei Verringerung der Feldstärke ergibt sich entsprechend eine Abstoßung der Pole. Hierbei ist die Volumenänderung dem Quadrat der angelegten Feldstärke proportional. Durch die erfindungsgemäße Verwendung eines Piezo-Aktors können durch eine entsprechende Steuerung des elektrischen Feldes hochgenaue Verschiebungen der Schleifspindel bei sehr kleinen Wegen von bspw. ± 40 µm erreicht werden. Der Piezo-Aktor kann dabei sehr hohe Kräfte von bspw. 15 kN aufbringen.

Gemäß einer bevorzugten Ausgestaltung der Erfindung greift der Piezo-Aktor an dem Lager der Schleifspindel an und drückt dieses gegen durch Federn und/oder einen festen Lagerbock gebildete Widerlager, so daß bei gewährleisteter Verschiebbarkeit der Schleifspindel diese in definierter Weise allein durch die Wirkung des Piezo-Aktors erfolgt.

In Weiterbildung der Erfindung spannt der Piezo-Aktor die Schleifspindel gegen die Feder vor, so daß durch entsprechende Steuerung des elektrischen Feldes (Erhöhung bzw. Erniedrigung der Feldstärke) eine Vor- und Zurückbewegung der Schleifspindel ermöglicht wird. Bei entsprechender Auswahl der Federstärke kann sichergestellt werden, daß die Verschiebung der Schleifspindel nur entsprechend der Längenänderung des Piezo-Aktors erfolgt und die Schleifspindel immer zuverlässig gelagert bleibt.

Zweckmäßigerweise greift der Piezo-Aktor an einem Lageraußenring des Lagers der Schleifspindel an, da hierdurch weiterhin herkömmliche Schleifspindellager verwendet werden können, und der zusätzliche Montageaufwand minimiert werden kann.

Vorzugsweise sind an beiden Lagern der Schleifspindel Piezo-Aktoren vorgesehen, so daß durch eine plus-muinus-Beaufschlagung der Aktoren Durchmesserunterschiede an den einzelnen zu schleifenden Lagersitzen vermieden werden.

Gemäß einer bevorzugten Ausgestaltung der Erfindung weist die Schleifmaschine ein Meßsystem zur Überprüfung des zu schleifenden Werkstücks auf, wobei das gewonnene Meßsignal der Maschinensteuerung zugeführt und der Aktivierung des Piezo-Aktors zugrundegelegt wird. Auf diese Weise wird ermöglicht, daß während des Schleifvorgangs eine Konizität zwischen Schleifspindelachse und Werkstückspindelachse erfaßbar ist und sofort korrigiert werden kann.

Hierzu weist das Meßsystem vorzugsweise wenigstens zwei Meßtaster auf, über die der Durchmesser des zu schleifenden Werkstücks an wenigstens zwei axial voneinander beabstandeten Positionen erfaßbar ist. Weicht dieser Durchmesser um mehr als einen festgelegten Schwellenwert voneinander ab, zeigt dies an, daß das Werkstück, bspw. ein Lagersitz einer Kurbelwelle oder dgl., schräg abgeschliffen wird, was auf eine Konizität zwischen Schleifscheibenachse und Kurbelwellenachse bzw. Schleifspindelachse und Werkstückspindelachse zurückzuführen ist. Durch eine entsprechende Aktivierung des Piezo-Aktors kann diese Konizität korrigiert werden, so daß wieder das gewünschte Schleifergebnis erzielt wird.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:

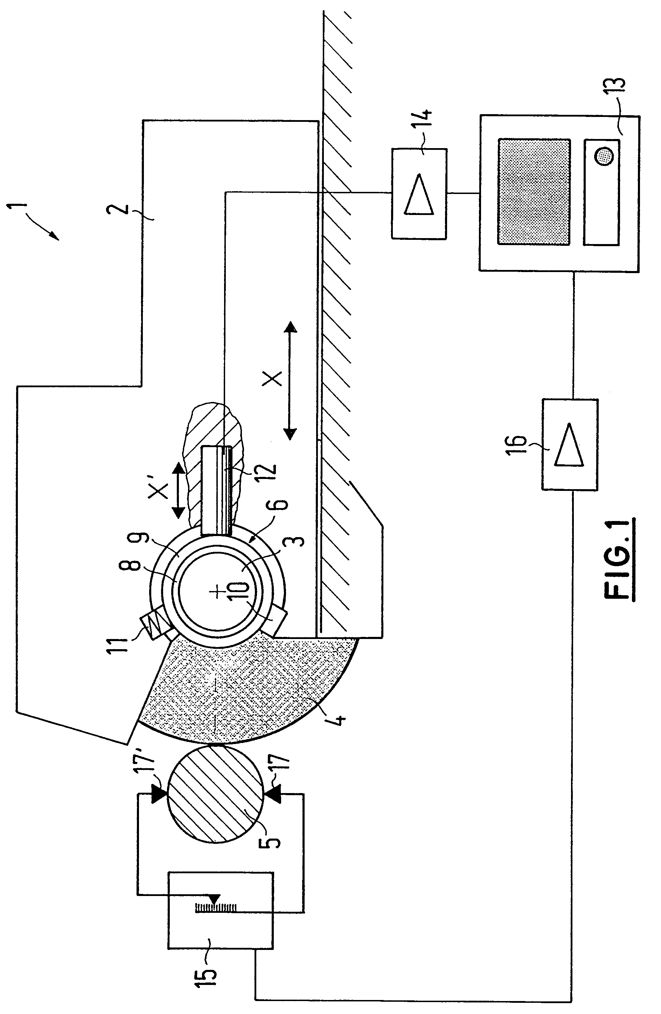

- Fig. 1: eine schematische Darstellung einer erfindungsgemäßen Schleifmaschine und

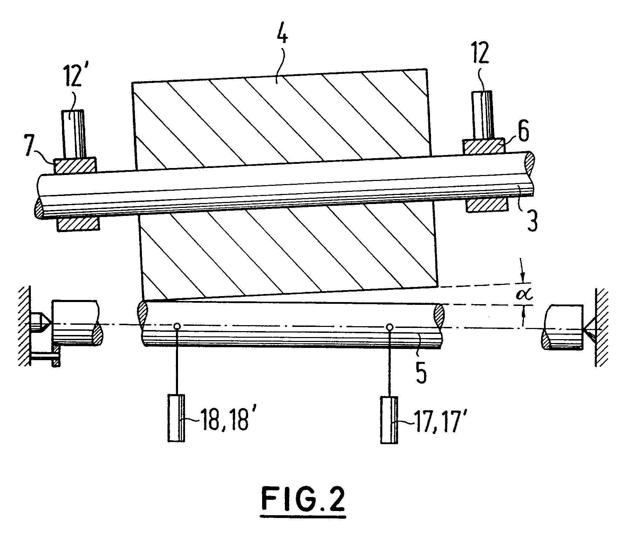

- Fig. 2: eine schematische Draufsicht auf eine Schleifspindel und eine Werkzeugspindel.

Die in der Zeichnung dargestellte Schleifmaschine 1 weist einen entlang der X-Achse verfahrbaren Schleifspindelstock 2 auf, in dem eine Schleifspindel 3 drehbar antreibbar gelagert ist. Die Schleifspindel 3 trägt eine oder mehrere Schleifscheiben 4 zum Schleifen von Werkstücken 5, insbesondere von Lagersitzen von Kurbelwellen oder dgl.. Das Werkstück 5 ist in einem nicht näher dargestellten Werkstückspindelstock bspw. zwischen Spitzen drehbar antreibbar gelagert.

Die Schleifspindel 3 ist wenigstens an ihren äußeren Enden in Lagern 6, 7 gelagert, die bspw. einen an der Schleifspindel 3 angreifenden Lagerinnenring 8 und einen im Schleifspindelstock 2 gehaltenen Lageraußenring 9 aufweisen. Es versteht sich, daß die Erfindung sich auf jede beliebige Lagerung der Schleifspindel 3 in dem Schleifspindelstock 2 erstreckt, insbesondere Gleit- oder Wälzlagerungen. Der Lageraußenring 9 der Lager 6, 7 wird in dem Schleifspindelstock 2 bspw. über drei Punkte gehalten, wobei einer der Punkte ein fester Lagerbock 10, einer eine Feder 11 und der dritte ein Piezo-Aktor (Piezo-Translator) 12 ist. Der Piezo-Aktor 12 kann seine Abmessungen unter dem Einfluß eines über eine Maschinensteuerung 13 angelegten elektrischen Feldes in X'-Richtung ändern. Hierbei werden die von der Maschinensteuerung 13 ausgesandten Signale über einen Leistungsverstärker 14 an den Piezo-Aktor 12 weitergeleitet. Die Schleifspindel 3 ist derart in die Lager 6, 7 eingesetzt, daß sie gegen die Feder 11 vorgespannt ist. Dadurch kann bei einer entsprechenden Längenveränderung des Piezo-Aktors 12 eine Hin- und Herbewegung der Schleifspindel 3 ermöglicht werden, die durch die Feder 11 und dem Lagerbock 10 gegen den Piezo-Aktor 12 gedrückt wird.

Während des Schleifvorgangs wird das Werkstück 5, insbesondere der Durchmesser von zu schleifenden Lagersitzen einer Kurbelwelle oder dgl., über ein ggf. als In-Prozeß-Meßsystem ausgebildetes Meßsystem 15 ständig überprüft, dessen Meßwerte über einen Meßverstärker 16 zur Maschinensteuerung 13 übertragen werden. Das In-Prozeß-Meßsystem weist bspw. zwei Paare von Meßtastern 17, 17' und 18, 18' auf, über die der Durchmesser des zu schleifenden Werkstücks 5 an zwei axial voneinander beabstandeten Punkten gemessen wird. Weicht der Durchmesser an diesen beiden Punkten voneinander ab, so bedeutet dies, daß eine Konizität (Schrägstellung) zwischen der Schleifscheibe 4 und dem Werkstück 5 vorliegt, so daß das Werkstück 5 konisch abgeschliffen wird. Die unterschiedlichen Durchmesserwerte können in der Maschinensteuerung zur Ermittlung des Konizitätswinkels α verwendet werden. Durch eine entsprechende Ansteuerung der Piezo-Aktoren 12, 12' an den Lagern 6, 7 der Schleifspindel 3 (d.h. Anlegen einer entsprechenden elektrischen Feldstärke an die Piezo-Aktoren 12, 12') kann eine Längenänderung der Piezo-Aktoren 12, 12' bewirkt werden, die in eine Verschiebung der Schleifspindel 3 gegen die Feder 11 und den Lagerbock 10 umgesetzt wird. Bei einem äußerst geringen Verschiebeweg von bspw. ± 40 µm können über den Piezo-Aktor 12, 12' Kräfte von bspw. 15 kN aufgebracht werden, wobei der Verschiebeweg über eine entsprechende Aufbringung des elektrischen Feldes hochgenau festgelegt werden kann. Durch eine ausreichend hohe Federkraft der Feder 11 und die Elastizität des Lagerbocks 10 kann sichergestellt werden, daß die Schleifspindel 3 exakt in dem Schleifspindelstock 2 gelagert ist und die Verschiebung der Schleifspindel 3 allein entsprechend der Längenänderung des Piezo-Aktors 12, 12' erfolgt.

Über das Meßsystem 15 kann eine Konizität von Schleifscheibenachse 4 und Werkstückachse 5 sehr schnell erkannt und durch entsprechende Aktivierung der Piezo-Aktoren 12, 12' sofort ausgeglichen werden. Auf diese Weise kann die Bearbeitungsgenauigkeit beim Schleifen weiter erhöht werden, wobei die bei herkömmlichen Verstellmechanismen auftretenden Fehlfunktionen zuverlässig vermieden werden.

### Bezugszeichenliste:

- 1: Schleifmaschine
- 2: Schleifspindelstock
- 3: Schleifspindel
- 4: Schleifscheiben
- 5: Werkstück
- 6: Lager
- 7: Lager
- 8: Lagerinnenring
- 9: Lageraußenring
- 10: Lagerbock
- 11: Feder
- 12, 12': Piezo-Aktoren
- 13: Maschinensteuerung
- 14: Leistungsverstärker
- 15: Meßsystem
- 16: Meßverstärker
- 17, 17': Meßtaster
- 18, 18': Meßtaster

## Patentansprüche

1. Schleifmaschine mit einer wenigstens ein Schleifwerkzeug, insbesondere eine Schleifscheibe (4), tragenden Schleifspindel (3), wobei die Schleifspindel (3) in einem Schleifspindelstock (2) in Lagern (6, 7) drehbar antreibbar gelagert ist, und mit einer in einem Werkstückspindelstock drehbar antreibbar gelagerten Werkstückspindel zur Aufnahme und zum Drehen eines Werkstücks (5), **dadurch gekennzeichnet**, daß wenigstens ein Lager (6, 7) der Schleifspindel (3) radial verschieblich in dem Schleifspindelstock (2) angeordnet ist, und daß über einen Piezo-Aktor (12), an den über eine Maschinensteuerung (13) ein definiertes elektrisches Feld anlegbar ist, die Schleifspindel (3) relativ zu dem Werkstück (5) ausrichtbar ist.

2. Schleifmaschine nach Anspruch 1, **dadurch gekennzeichnet**, daß der Piezo-Aktor (12) an dem Lager (6, 7) der Schleifspindel (3) angreift und dieses gegen durch Federn (11) und/oder einen festen Lagerbock (10) gebildete Widerlager drückt.

3. Schleifmaschine nach Anspruch 1 oder 2, **dadurch gekennzeichnet**, daß der Piezo-Aktor (12) die Schleifspindel (3) gegen die Feder (11) vorspannt.

4. Schleifmaschine nach einem der Ansprüche 1 bis 3, **dadurch gekennzeichnet**, daß der Piezo-Aktor (12) an einem Lageraußenring (9) des Lagers (6, 7) der Schleifspindel (3) angreift.

5. Schleifmaschine nach einem der Ansprüche 1 bis 4, **dadurch gekennzeichnet**, daß an beiden Lagern (6, 7) der Schleifspindel (3) ein Piezo-Aktor (12, 12') angreift.

6. Schleifmaschine nach einem der Ansprüche 1 bis 5, **gekennzeichnet durch** ein Meßsystem (15) zur Überprüfung des zu schleifenden Werkstücks (5), wobei das gewonnene Meßsignal der Maschinensteuerung (13) zugeführt und der Aktivierung des Piezo-Aktors (12) zugrundegelegt wird.

7. Schleifmaschine nach Anspruch 6, **dadurch gekennzeichnet**, daß das Meßsystem (15) wenigstens zwei Meßtaster (17, 17', 18, 18') aufweist, über die der Durchmesser des zu schleifenden Werkstücks (5) an wenigstens zwei axial voneinander beabstandeten Positionen erfaßbar ist.
